# EUROPEAN PATENT APPLICATION

(11) **EP 4 331 919 A1**
(43) Date of publication of application: **06.03.2024**
(21) Application number: 21944180.5
(22) Date of filing: 04.06.2021
(51) Int. Cl.: B60R 16/037

(54) **VEHICLE SETTING DEVICE, VEHICLE ONBOARD DEVICE, VEHICLE SETTING SYSTEM, VEHICLE SETTING METHOD, AND PROGRAM**

(71) Applicant: NEC Corporation, 108-8001 Tokyo (JP)
(72) Inventor: KAWAMURA Toshiaki, Tokyo 108-8001 (JP); WATANABE Yoshihiro, Tokyo 108-8001 (JP); SUZUKI Yuichi, Tokyo 108-8001 (JP)
(74) Representative: Vossius & Partner Patentanwälte Rechtsanwälte mbB
(86) International application number: PCT/JP2021/021328
(87) International publication number: WO 2022/254684

(57) **Abstract**

A vehicle setting apparatus (10) communicates with a vehicle onboard apparatus (20) mounted on a vehicle. The vehicle setting apparatus (10) includes a first reception unit (110), an information decision unit (120), and a first transmission unit (130). The first reception unit (110) receives user identification information for identifying a user boarding the vehicle, from the vehicle onboard apparatus. The information decision unit (120) reads out, from a first storage unit (140) that stores setting information for setting a state of a setting target of a vehicle for each person in relation to the user identification information relating to the person, the setting information (first setting information) relating to the user identification information being received by the first reception unit (110). The first transmission unit (130) transmits the first setting information to the vehicle onboard apparatus.

## Description

### TECHNICAL FIELD

The present invention relates to a vehicle setting apparatus, a vehicle onboard apparatus, a vehicle setting system, a vehicle setting method, and a program.

### BACKGROUND ART

People who drive vehicles have different physiques. Therefore, vehicles have parameters such as a seat position of driver's seat, a side mirror angle, and an interior temperature setting, to be changed by a driver. In view of this, Patent Document 1 describes the following. First, an in-vehicle environment automatic change apparatus, mounted on a vehicle, stores in advance in-vehicle environment information in relation to a mobile phone owned by a user. For example, the in-vehicle environment information includes seat position information, air-conditioner setting information, audio setting information, and navigation system setting information. Further, the in-vehicle environment automatic change apparatus pairs with a mobile phone when a key is inserted into the vehicle, and performs setting of the in-vehicle environment by using the in-vehicle environment information relating to the paired mobile phone.

Note that, Patent Document 2 describes that onboard equipment mounted on a vehicle transmits operation data of the vehicle and biometric information of a driver to a data center. Further, Patent Document 3 describes that a vehicle control apparatus mounted on a vehicle is remotely operated by an operation apparatus.

### RELATED DOCUMENT

### PATENT DOCUMENT

Patent Document 1: Japanese Patent Application Publication No. 2014-151892
Patent Document 2: Japanese Patent Application Publication No. 2019-125229
Patent Document 3: Japanese Patent Application Publication No. 2020- 133233

### SUMMARY OF INVENTION

### TECHNICAL PROBLEM

It is time-consuming for a user of a vehicle to change a setting target on a vehicle to a user's preferred state. An example object of the present invention is to reduce work for changing a setting of a setting target of the vehicle to a state according to a user's preferred state.

### SOLUTION TO PROBLEM

According to one aspect of the present invention, there is provided a vehicle setting apparatus that communicates with a vehicle onboard apparatus mounted on a vehicle, the vehicle setting apparatus including:
a first reception unit that receives user identification information, from the vehicle onboard apparatus, for identifying a user boarding the vehicle;
an information decision unit that reads out first setting information from a first storage unit that stores setting information for setting a state of a setting target of a vehicle for each person, in relation to the user identification information of the person, the first setting information being the setting information relating to the user identification information being received by the first reception unit; and
a first transmission unit that transmits the first setting information to the vehicle onboard apparatus.

According to one aspect of the present invention, there is provided a vehicle onboard apparatus being mounted on a vehicle, the vehicle onboard apparatus including:
an acquisition unit that acquires user identification information for identifying a user boarding the vehicle;
a second transmission unit that transmits the user identification information to a vehicle setting apparatus;
a second reception unit that acquires setting information for setting a state of a setting target of a vehicle, from the vehicle setting apparatus; and
a setting processing unit that executes setting processing of setting the state of the setting target by using the setting information.

According to one aspect of the present invention, there is provided a vehicle setting system including the vehicle setting apparatus described above and the vehicle onboard apparatus described above.

According to one aspect of the present invention, there is provided a vehicle setting method including,
by a computer that communicates with a vehicle onboard apparatus mounted on a vehicle:
first reception processing of receiving user identification information for identifying a user boarding the vehicle, from the vehicle onboard apparatus;
information decision processing of reading out first setting information, from a first storage unit that stores setting information for setting a state of a setting target of a vehicle for each person, in relation to the user identification information of the person, the first setting information being the setting information relating to the user identification information being acquired in the first reception processing; and
first transmission processing of transmitting the first setting information to the vehicle onboard apparatus.

According to one aspect of the present invention, there is provided a vehicle setting method including,
by a computer mounted on a vehicle:
acquisition processing of acquiring user identification information for identifying a user boarding the vehicle;
second transmission processing of transmitting the user identification information to a vehicle setting apparatus;
second reception processing of acquiring setting information for setting a state of a setting target of the vehicle, from the vehicle setting apparatus; and
setting processing of executing setting processing of setting the state of the setting target, based on the setting information.

According to one aspect of the present invention, there is provided a program causing a computer that communicates with a vehicle onboard apparatus mounted on a vehicle to have:
a first reception function of receiving user identification information for identifying a user boarding the vehicle, from the vehicle onboard apparatus;
an information decision function of reading out first setting information, from a first storage unit that stores setting information for setting a state of a setting target of a vehicle for each person, in relation to the user identification information of the person, the first setting information being the setting information relating to the user identification information being received by the first reception function; and
a first transmission function of transmitting the first setting information to the vehicle onboard apparatus.

According to one aspect of the present invention, there is provided a program causing a computer mounted on a vehicle to have:
an acquisition function of acquiring user identification information for identifying a user boarding the vehicle;
a second transmission function of transmitting the user identification information to a vehicle setting apparatus;
a second reception function of acquiring setting information for setting a state of a setting target of a vehicle, from the vehicle setting apparatus; and
a setting processing function of executing setting processing of setting a state of the setting target, based on the setting information.

### ADVANTAGEOUS EFFECTS OF INVENTION

According to the present invention, a small amount of workload is required for changing a setting target of a vehicle to a driver's preferred state.

### BRIEF DESCRIPTION OF DRAWINGS

The object described above and other objects, features, and advantageous effects are further clarified in suitable example embodiments described below and the following drawings accompanying therewith.

[Fig. 1] It is a diagram explaining a configuration of a vehicle setting system according to an example embodiment.
[Fig. 2] It is a diagram illustrating one example of a function configuration of the vehicle setting apparatus.
[Fig. 3] It is a diagram illustrating one example of information that is stored in a first storage unit.
[Fig. 4] It is a diagram illustrating one example of information that is stored in a second storage unit.
[Fig. 5] It is a diagram illustrating one example of a function configuration of a vehicle onboard apparatus.
[Fig. 6] It is a diagram illustrating a hardware configuration example of the vehicle setting apparatus.
[Fig. 7] It is a flowchart illustrating one example of processing that is executed by the vehicle setting apparatus and the vehicle onboard apparatus.
[Fig. 8] It is a flowchart illustrating a detail example of step S30 in Fig. 7.
[Fig. 9] It is a diagram illustrating a first example of processing that is executed by an information decision unit in step S360 in Fig. 8.
[Fig. 10] It is a diagram illustrating a second example of the processing that is executed by the information decision unit in step S360 in Fig. 8.
[Fig. 11] It is a diagram illustrating a third example of the processing that is executed by the information decision unit in step S360 in Fig. 8.

### DESCRIPTION OF EMBODIMENTS

Example embodiments of the present invention are described below with reference to the drawings. Note that, in all the drawings, a similar constituent element is denoted by a similar reference sign, and description therefor will not be repeated as appropriate.

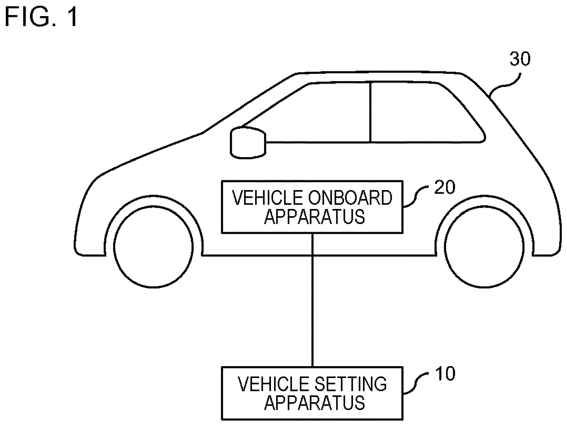

Fig. 1 is a diagram illustrating a configuration of a vehicle setting system according to the example embodiment. The vehicle setting system is a system for setting a state of a setting target of a vehicle 30 for each user. The setting target includes at least one of a movable portion such as a position and angle of a driver's seat or a front passenger's seat, an angle of a mirror (for example, a side mirror such as a door mirror), and an operation condition of an air-conditioning system (for example, a setting temperature).

The vehicle setting system includes a vehicle setting apparatus 10 and a vehicle onboard apparatus 20. The vehicle setting apparatus 10 and the vehicle onboard apparatus 20 communicate with each other. The vehicle setting system uses information for identifying a user of the vehicle setting system (hereinafter, referred to as user identification information). The user identification information preferably includes biometric information. The biometric information used here is, for example at least one of face information that is generated from a face image (for example, a feature value of a face) and fingerprint information, but is not limited thereto. The user identification information may be configured only by the biometric information.

The vehicle onboard apparatus 20 is mounted on the vehicle 30. The vehicle onboard apparatus 20 acquires user identification information of a person on board of the vehicle 30 and transmits the user identification information to the vehicle setting apparatus 10. In this state, the vehicle onboard apparatus 20 transmits information indicating a vehicle type of the vehicle 30 (hereinafter, referred to as vehicle type information) to the vehicle setting apparatus 10 as required.

The vehicle setting apparatus 10 stores setting information for each piece of user identification information. The setting information is information for setting the setting target to a predetermined state and is generated for each person. The setting information indicates, for example, a preferred state of the person (for example, a position of a seat and an angle of a mirror). The vehicle setting apparatus 10 transmits the setting information relating to the user identification information acquired from the vehicle onboard apparatus 20, to the vehicle onboard apparatus 20.

The vehicle setting apparatus 10 may store the setting information for each piece of vehicle type information and for each piece of user identification information. In this case, the vehicle setting apparatus 10 transmits the setting information relating to a combination of the user identification information and the vehicle type information that are acquired from the vehicle onboard apparatus 20 (an example of a target combination), to the vehicle onboard apparatus 20.

The vehicle onboard apparatus 20 executes processing of setting the state of the setting target of the vehicle 30 (hereinafter, referred to as setting processing) by using the setting information acquired from the vehicle setting apparatus 10. For example, the vehicle onboard apparatus 20 outputs the setting information to a control apparatus mounted on the vehicle 30. Then, the control apparatus sets the state of the setting target according to the setting information. Note that, the vehicle onboard apparatus 20 and the control apparatus may be wired or wirelessly connected.

The vehicle 30 may be owned by, for example, an individual or a corporation such as a company. In the former case, the state of the setting target differs according to an owner and each family member, for example. In the latter case, the vehicle 30 may be used for rental purposes or car-sharing. In this case, a suitable state of the setting target (for example, a suitable position of a seat or a suitable angle of a mirror) differs according to a user. In most cases, from the user's point of view, a different vehicle is prepared each time a rental car or car sharing service is provided, even when the user specifies the same vehicle type. In view of this, the setting target described above can easily be set to a suitable state even when a different vehicle is provided, by using the vehicle setting system illustrated in Fig. 1.

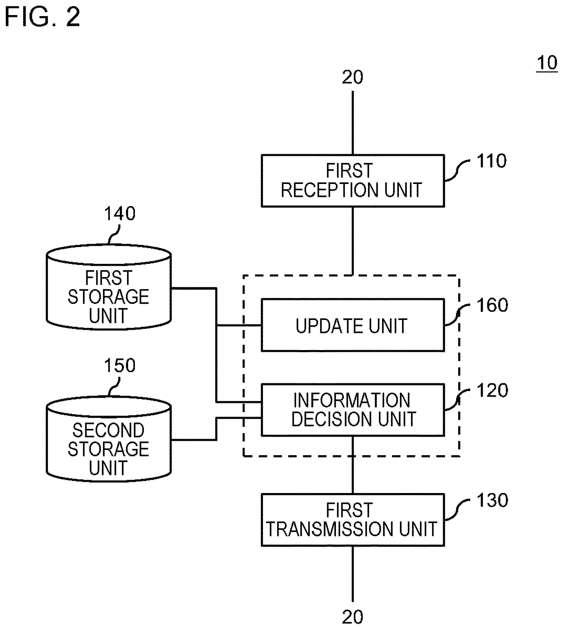

Fig. 2 is a diagram illustrating an example of a function configuration of the vehicle setting apparatus 10. In the example illustrated in the present drawing, the vehicle setting apparatus 10 includes a first reception unit 110, an information decision unit 120, a first transmission unit 130, and a first storage unit 140.

The first storage unit 140 stores the setting information in relation to the user identification information for each of a plurality of persons. When the setting information is generated for each vehicle type, the first storage unit 140 stores the setting information for each piece of user identification information and for each piece of vehicle type information.

The first reception unit 110 receives user identification information of a user boarding the vehicle, from the vehicle onboard apparatus 20. Herein, the first reception unit 110 also receives the vehicle type information from the vehicle onboard apparatus 20 as required.

The information decision unit 120 reads out setting information relating to the user identification information received by the first reception unit 110 (hereinafter, referred to as first setting information), from the first storage unit 140. When the first reception unit 110 also receives the vehicle type information, the information decision unit 120 reads out the setting information relating to the combination of the user identification information and the vehicle type information that are received by the first reception unit 110, as the first setting information.

The first transmission unit 130 transmits the first setting information to the vehicle onboard apparatus 20.

In the example illustrated in the present drawing, the vehicle setting apparatus 10 further includes a second storage unit 150 and an update unit 160.

When the setting information is generated for each vehicle type, the first storage unit 140 may not store the setting information relating to the user identification information and the vehicle type information that are received by the first reception unit 110. In this case, the information decision unit 120 generates the first setting information by also using information stored in the second storage unit 150.

In detail, the second storage unit 150 stores information relating to a movable portion of the vehicle type for each vehicle type information (hereinafter, referred to as movable portion information). The movable portion information includes information indicating a position or a direction of a movable portion in a standard state.

The information decision unit 120 reads out setting information (hereinafter, referred to as second setting information) relating to a combination of vehicle type information (hereinafter, referred to as second vehicle type information) that is different from the vehicle type information received by the first reception unit 110 (hereinafter, referred to as first vehicle type information) and the user identification information. The information decision unit 120 reads out the movable portion information relating to the first vehicle type information and the movable portion information relating to the second vehicle type information from the second storage unit 150, and generates the first setting information by using those two pieces of the movable portion information and the second setting information. Details of the processing executed herein are described later with reference to another drawing.

The update unit 160 updates the information stored in the first storage unit 140. In detail, the first reception unit 110 receives information for generating or updating the setting information (hereinafter, referred to as update information) and the vehicle type information, from the vehicle onboard apparatus 20. The update unit 160 updates the information stored in the first storage unit 140 by using the update information and the vehicle type information that are received by the first reception unit 110. Here, the update unit 160 causes the first storage unit 140 to store an update date. The processing executed by the update unit 160 and detail examples of the update information are described later with reference to another drawing.

Note that, at least one of the first storage unit 140 and the second storage unit 150 may be positioned outside of the vehicle setting apparatus 10.

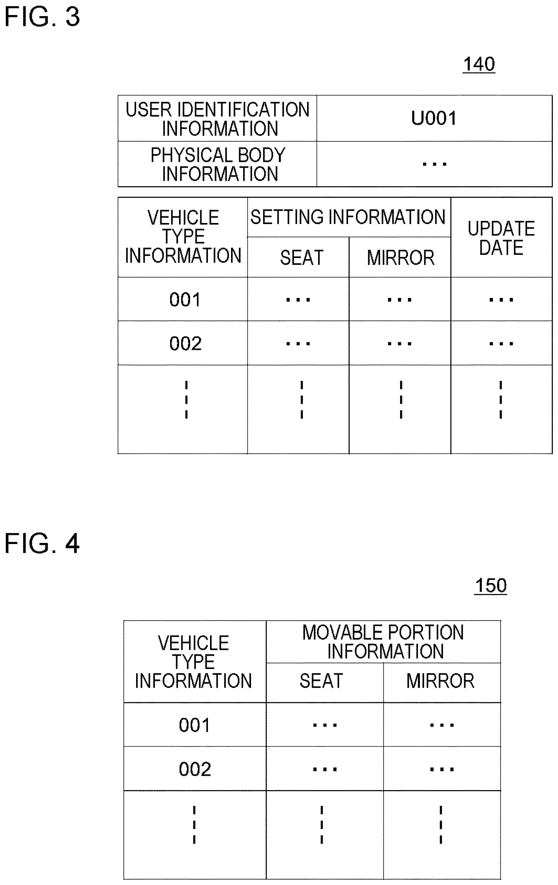

Fig. 3 is a diagram illustrating an example of the information stored in the first storage unit 140. As described above, the first storage unit 140 stores the setting information and the update date of the setting information for each combination of the user identification information and the vehicle type information. In the example illustrated in the present drawing, the setting information includes setting information of a seat (for example, at least one of a driver's seat and a front passenger's seat) and setting information of a mirror. The setting information of the seat includes information indicating a position of the seat in a front-and-rear direction, a height of the seat, and an angle of a backrest. The setting information of the mirror includes information indicating horizontal and vertical angles of the side mirror.

The first storage unit 140 stores physical body information of a user in relation to the user identification information of the user. The physical body information includes information relating to a size of the user's body (for example, at least one of a height and a seated height). The information decision unit 120 uses the physical body information at the time of generating the setting information as required. Note that, the first storage unit 140 may not store the physical body information.

Fig. 4 is a diagram illustrating one example of the information stored in the second storage unit 150. As described above, the second storage unit 150 stores the movable portion information for each piece of vehicle type information. The movable portion information includes information relating to a seat and information relating to a mirror. The information relating to the seat includes information indicating a relative position between a driver's seat in a standard state (that is, a set value is 0) and at least one of an acceleration pedal and a brake pedal, a height of the seat in the standard state (with the ground surface as a reference), and information indicating inclination of the backrest of the seat in the standard state. The information relating to the mirror includes information relating to a relative angle of the mirror in the standard state with the driver's seat in the standard state as a reference (for example, an angle of the mirror in the standard state with the longitudinal direction of the vehicle 30 as a reference). Detail examples of the movable portion information are described later with reference to another drawing.

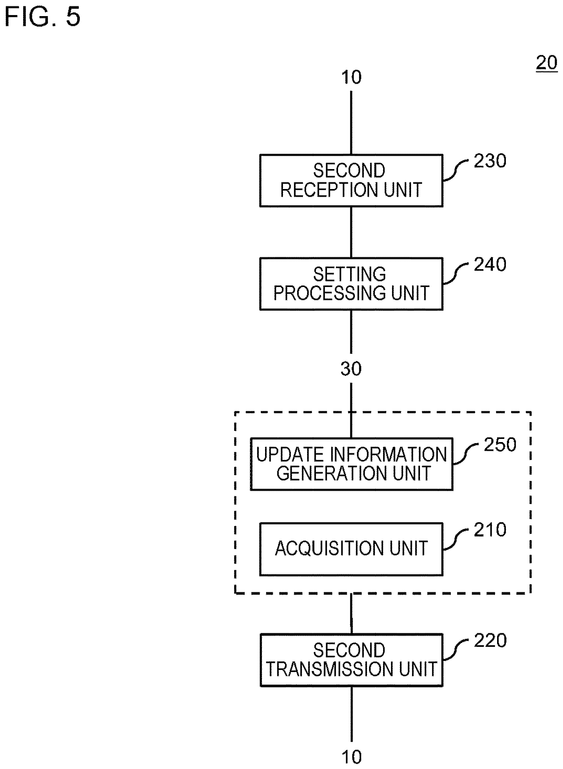

Fig. 5 is a diagram illustrating one example of a function configuration of the vehicle onboard apparatus 20. In the example illustrated in the present drawing, the vehicle onboard apparatus 20 includes an acquisition unit 210, a second transmission unit 220, a second reception unit 230, and a setting processing unit 240.

The acquisition unit 210 acquires user identification information of a user boarding the vehicle 30. For example, when the user identification information is face information, the acquisition unit 210 acquires an image from an image capturing apparatus mounted on the vehicle 30, and generates face information by processing the image. The image capturing apparatus may be a part of the acquisition unit 210 or may be outside of the vehicle onboard apparatus 20. When the user identification information is fingerprint information, the acquisition unit 210 includes a sensor for reading fingerprint information. The acquisition unit 210 may acquire the user identification information from a mobile terminal owned by a user.

The second transmission unit 220 transmits the user identification information acquired by the acquisition unit 210 to the vehicle setting apparatus 10. In this state, the second transmission unit 220 also transmits the vehicle type information to the vehicle setting apparatus 10 as required. The second transmission unit 220 stores the vehicle type information in advance. Note that, another function unit of the vehicle onboard apparatus 20 may store the vehicle type information.

The second reception unit 230 receives the setting information from the vehicle setting apparatus 10.

The setting processing unit 240 executes the setting processing described above, that is, processing of setting the state of the setting target, by using the setting information received by the second reception unit 230. In one example of the setting processing, the setting information being received is output to the control apparatus of the vehicle 30. Noto that, the setting processing unit 240 may directly control the setting target according to the setting target being received.

The vehicle onboard apparatus 20 further includes an update information generation unit 250. The update information generation unit 250 generates the update information by using the information acquired from the vehicle 30. As described above, the update information is information for updating the setting information stored in the first storage unit 140 of the vehicle setting apparatus 10.

Here, details of the update information are described. The setting processing unit 240 executes the setting processing described above before the vehicle 30 starts moving. However, setting according to the setting processing may not be optimal for a user. Thus, a user may change the setting of the setting target while the vehicle 30 moves. In view of this, after the vehicle 30 stops, the update information generation unit 250 acquires information indicating the state of the setting target in this state (for example, a position of the seat in the front-and-rear direction, a height of the seat, and an angle of the backrest and horizontal and vertical angles of the side mirror), from the vehicle 30, and the information is used as the update information.

The second transmission unit 220 transmits the update information to the vehicle setting apparatus 10.

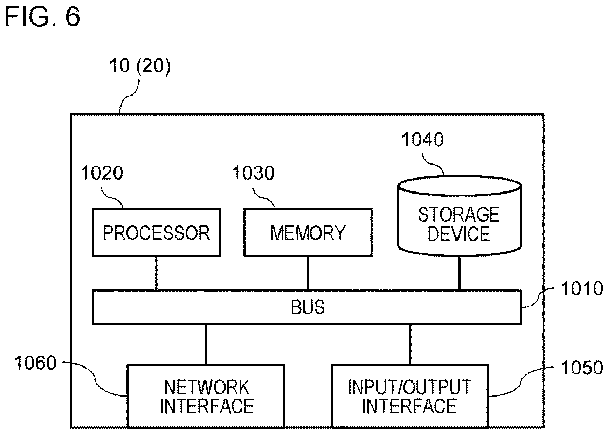

Fig. 6 is a diagram illustrating a hardware configuration example of the vehicle setting apparatus 10. The vehicle setting apparatus 10 includes a bus 1010, a processor 1020, a memory 1030, a storage device 1040, an input/output interface 1050, and a network interface 1060

The bus 1010 is a data transmission path in which the processor 1020, the memory 1030, the storage device 1040, the input/output interface 1050, and the network interface 1060 transmit and receive data mutually. Note that, a method of connecting the processor 1020 and the like to one another is not limited to bus connection.

The processor 1020 is a processor achieved by a central processing unit (CPU), a graphics processing unit (GPU), or the like.

The memory 1030 is a main storage apparatus achieved by a random access memory (RAM) or the like.

The storage device 1040 is an auxiliary storage apparatus achieved by a hard disk drive (HDD), a solid state drive (SSD), a memory card, a read only memory (ROM), or the like. The storage device 1040 stores a program module for achieving each function (for example, the first reception unit 110, the information decision unit 120, the first transmission unit 130, and the update unit 160) of the vehicle setting apparatus 10. When the processor 1020 reads and executes each of the program modules on the memory 1030, each of the functions relating to the program modules is achieved. Further, the storage device 1040 also functions as the first storage unit 140 and the second storage unit 150.

The input/output interface 1050 is an interface for connecting the vehicle setting apparatus 10 to various input/output devices.

The network interface 1060 is an interface for connecting the vehicle setting apparatus 10 to a network. The network is a local area network (LAN) or a wide area network (WAN), for example. A method for connecting the network interface 1060 to the network may be wireless connection or wired connection. The vehicle setting apparatus 10 communicates with the vehicle onboard apparatus 20 via the network interface 1060, for example.

Note that, the hardware configuration of the vehicle onboard apparatus 20 is as illustrated in Fig. 6. The storage device 1040 stores a program module for achieving each function (for example, the acquisition unit 210, the second transmission unit 220, the second reception unit 230, the setting processing unit 240, and the update information generation unit 250) of the vehicle onboard apparatus 20. The vehicle onboard apparatus 20 communicates with the vehicle 30 via the input/output interface 1050, for example. The vehicle onboard apparatus 20 communicates with the vehicle setting apparatus 10 via the network interface 1060, for example.

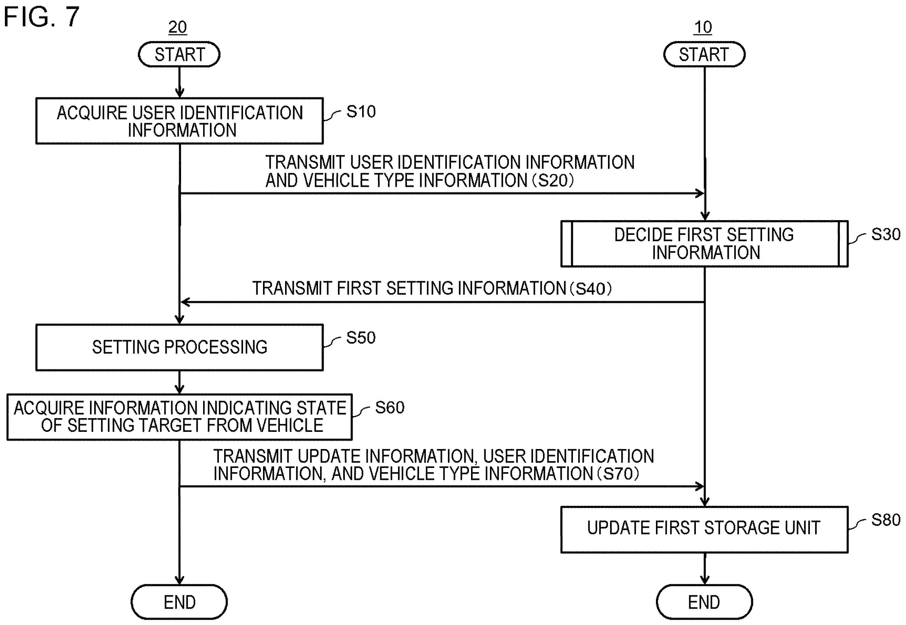

Fig. 7 is a flowchart illustrating one example of processing that is executed by the vehicle setting apparatus 10 and the vehicle onboard apparatus 20. When a user boards the vehicle 30, the acquisition unit 210 of the vehicle onboard apparatus 20 acquires user identification information of the user (step S10).

For example, when the user identification information is face information, the image capturing apparatus mounted on the vehicle 30 generates a face image of a user in the vehicle 30 without any operation by the user. The acquisition unit 210 generates face information as the user identification information (for example, a feature value of a face) by processing the face image. In this manner, there is almost no work for the user to do when the acquisition unit 210 acquires the user identification information. Note that, the image capturing apparatus may generate a face image when the user performs a predetermined operation.

Subsequently, the second transmission unit 220 transmits the user identification information that is acquired by the acquisition unit 210 and vehicle type information, to the vehicle setting apparatus 10 (step S20).

The first reception unit 110 of the vehicle setting apparatus 10 receives the user identification information and the vehicle type information that are transmitted by the vehicle onboard apparatus 20. The information decision unit 120 decides first setting information to be transmitted to the vehicle onboard apparatus 20 (step S30). The first transmission unit 130 transmits the first setting information to the vehicle onboard apparatus 20 (step S40).

The second reception unit 230 of the vehicle onboard apparatus 20 receives the first setting information from the vehicle setting apparatus 10. Subsequently, the setting processing unit 240 executes the setting processing by using the first setting information received by the second reception unit 230. One example of the setting processing is as described with reference to Fig. 1 (step S50). The setting processing is executed before the vehicle 30 starts moving (for example, before a user starts driving the vehicle 30).

Subsequently, a user changes the state of the setting target as required. For example, a user changes at least one of a position of the seat in the front-and-rear direction, a height of the seat, an angle of the backrest, a horizontal angle of the side mirror, and a vertical angle of the side mirror, as required.

When the vehicle 30 stops (for example, when a user finishes driving the vehicle 30 and the engine stops), the update information generation unit 250 acquires information indicating the current state of the setting target (step S60). By using the information, the update information generation unit 250 generates the update information, that is, information for updating the setting information stored in the first storage unit 140. The second transmission unit 220 transmits the update information, the user identification information generated in step S10, and the vehicle type information to the vehicle setting apparatus 10 (step S70). Note that, the user identification information being transmitted herein may be generated at this timing.

Here, when the state indicated by the information acquired in step S60 and the state indicated by the first setting information acquired in step S40 are the same, in other words, when the state of the setting target is not changed after step S50, the processing after step S70 may be omitted. Further, in step S60 or step S70, processing of confirming a user whether to update the first setting information to the information indicating the current setting may be executed. One example of the processing is processing of prompting an input (for example, an input to a touch panel) for instructing update (for example, display on a screen or a voice sound output).

The first reception unit 110 of the vehicle setting apparatus 10 acquires the update information, the user identification information, and the vehicle type information from the vehicle onboard apparatus 20. The update unit 160 updates the setting information relating to the combination of the user identification information and the vehicle type information that are acquired by the first reception unit 110 in the first storage unit 140, to information indicated by the update information. Here, the first storage unit 140 may not store the setting information relating to the combination of the user identification information and the vehicle type information that are acquired this time. In this case, the update unit 160 generates new setting information relating to the combination by using the update information and causes the first storage unit 140 to store the new setting information (step S80).

Note that, for example, when a user uses the vehicle setting apparatus 10 for the first time, the setting information may not be transmitted to the vehicle onboard apparatus 20 in step S40. In this case, the processing in step S50 is not executed, but the processing in step S60 to step S80 is executed. However, in step S80, the update unit 160 causes the first storage unit 140 to store the new setting information in relation to the new combination of the user identification information and the vehicle type information.

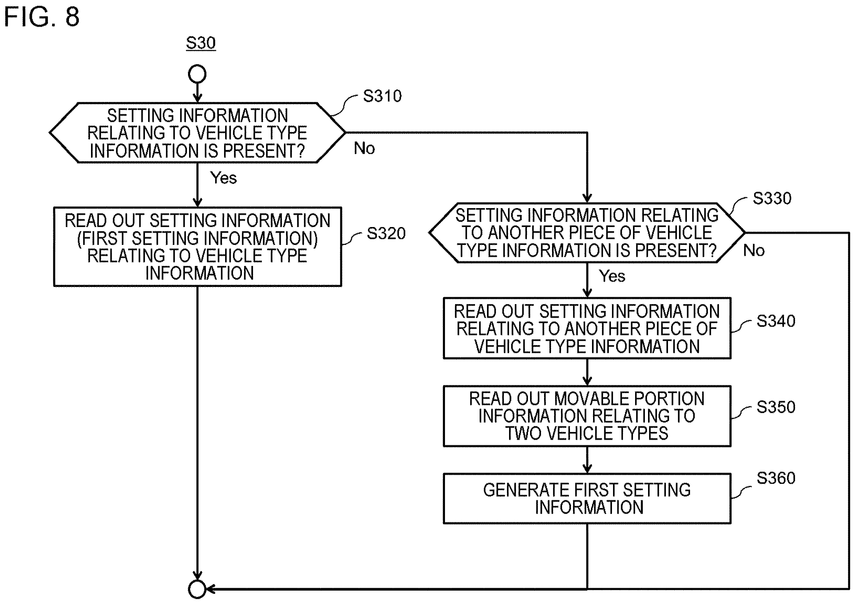

Fig. 8 is a flowchart illustrating a detail example of step S30 in Fig. 7. First, when the setting information relating to the user identification information and the vehicle type information (first vehicle type information) that are transmitted by the vehicle onboard apparatus 20 is stored in the first storage unit 140 (step S310: Yes), the information decision unit 120 of the vehicle setting apparatus 10 reads out the setting information as the first setting information (step S320).

Meanwhile, when the setting information is not stored in the first storage unit 140 (step S310: No), the information decision unit 120 confirms whether the setting information relating to the user identification information that is transmitted by the vehicle onboard apparatus 20 and another piece of vehicle type information (second vehicle type information) is stored in the first storage unit 140 (step S330).

When no setting information relating to the user identification information (step S330: No) is stored, the information decision unit 120 does not generate the first setting information. In this case, the first transmission unit 130 transmits the information indicating the situation to the vehicle onboard apparatus 20.

On the other hand, when the setting information relating to the user identification information is stored (step S330: Yes), the information decision unit 120 reads out the setting information, that is, the setting information relative to the second vehicle type information from the first storage unit 140 (step S340). Here, there may be a plurality of pieces of vehicle type information that can be the second vehicle type information. In this case, the information decision unit 120 may select vehicle type information with the most recent update date of the setting information as the second vehicle type information or may select vehicle type information of a vehicle type having a vehicle shape with the highest similarity to the current vehicle type as the second vehicle type information.

The information decision unit 120 reads out movable portion information relating to the first vehicle type information and movable portion information relating to the second vehicle type information from the second storage unit 150 (step S350). Subsequently, the information decision unit 120 corrects the setting information acquired in step S340 by using the two pieces of the movable portion information that are read out in step S350, and thus generates the setting information to be transmitted to the vehicle onboard apparatus 20, that is, the first setting information (step S360). Note that, details of the processing executed in step S360 are described later with reference to another drawing.

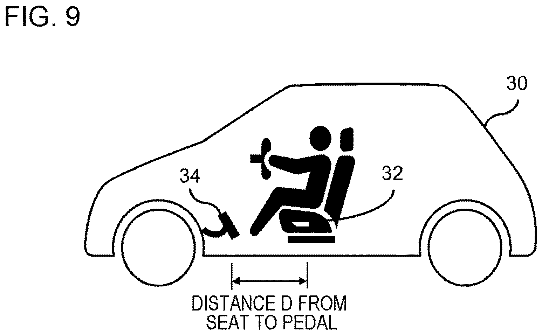

Fig. 9 is a diagram illustrating a first example of the processing that is executed by the information decision unit 120 in step S360 in Fig. 8. In the example illustrated in the present drawing, the information decision unit 120 generates information indicating a position of a driver's seat 32 in the front-and-rear direction, as at least a part of the setting information. In the following description with reference to Fig. 9 to Fig. 11, a vehicle type A is relating to the first vehicle type information, and a vehicle type B is relating to the second vehicle type information.

The position of the seat 32 in the front-and-rear direction is required to be set in such a way that a distance D from the seat 32 to a pedal 34 (for example, an accelerator pedal or a brake pedal) is a value desired by a user. In view of this, the information decision unit 120 generates the first setting information in such a way that the distance D of the vehicle type B is equal to the distance D acquired according to the setting information of the vehicle type A (hereinafter, referred to as a target distance).

Specifically, the movable portion information includes the distance D when the seat 32 is in the standard state (hereinafter, referred to as a standard distance). The standard distance may differ according to a vehicle type. Further, the setting information includes information indicating an extent to which the seat 32 is deviated from the standard state. The information decision unit 120 computes the target distance by using those pieces of information. Further, the information decision unit 120 computes a difference between the target distance and the standard distance of the vehicle type B, and the difference is used as the setting information.

Note that, the setting information may include inclination of a backrest of the seat 32. In this case, inclination of a backseat in the setting information of the vehicle type A is directly used as inclination of a backseat in the setting information of the vehicle type B. Further, the setting information may include a height of the seat 32 with a floor surface in the vehicle as a reference, and in this case, a height of the seat 32 in the setting information of the vehicle type A is directly used as a height of the seat 32 in the setting information of the vehicle type B.

Note that, the position of the seat 32 in the front-and-rear direction, the angle of the backrest, and the height of the seat may be set in a stepwise manner instead of a continuous manner. In this case, the setting information is information indicating the steps.

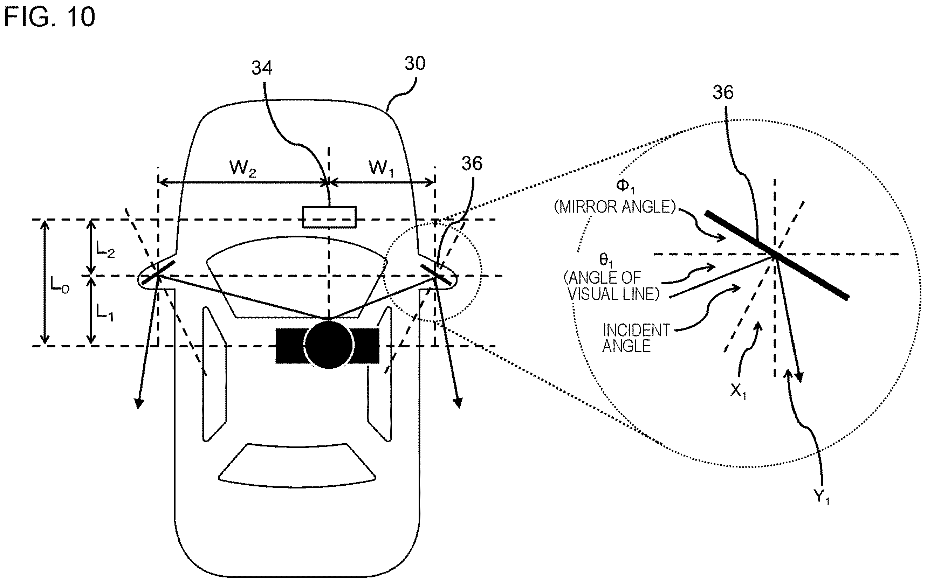

Fig. 10 is a diagram illustrating a second example of the processing that is executed by the information decision unit 120 in step S360 in Fig. 8. In the example illustrated in the present drawing, the information decision unit 120 generates information indicating a horizontal angle of a side mirror 36, as at least a part of the setting information.

In horizontal direction, an angle Y₁ when a visual line of a user seated on the seat 32 is reflected by the side mirror 36 (a reference is the longitudinal direction of the vehicle, however the width direction of the vehicle may be used) is required to be a value desired by the user. In view of this, the information decision unit 120 generates the first setting information relating to the side mirror 36 in such a way that the angle Y₁ according to the setting information of the vehicle type A and the angle Y₁ according to the setting information of the vehicle type B are the same values.

In addition to the example illustrated in Fig. 9, the movable portion information includes the following information.
- A horizontal angle when the side mirror 36 is in the standard state (hereinafter, referred to as a first reference angle). Note that, the angle may differ according to a vehicle type.
- A distance L₂ from the pedal 34 to the side mirror 36 in the longitudinal direction of the vehicle
- Distances W₁ and W₂ from the seat 32 to the side mirrors 36 in the width direction of the vehicle

In addition to the example illustrated in Fig. 9, the setting information includes information indicating horizontal inclination of the side mirror 36 with the first reference angle as a reference.

Relating to the vehicle type A, the information decision unit 120 computes a distance L₀ from the pedal 34 to the seat 32 according to the setting information. A computation method of the distance L₀ is as described with reference to Fig. 9. Further, the information decision unit 120 computes a distance L₁ from the seat 32 to the side mirror 36 in the longitudinal direction of the vehicle by subtracting the distance L₂ from the distance L₀. Further, the information decision unit 120 computes an angle of visual line θ₁ of a driver relating to the width direction of the vehicle. The angle of visual line θ₁ is "tan(L₁/W₁( or W₂))".

The information decision unit 120 computes a mirror angle ϕ₁ according to the setting information of the vehicle type A by using the first reference angle and the inclination of the side mirror 36 in the setting information. Further, the information decision unit 120 computes an incident angle of a visual line of a driver according to the setting information of the vehicle type A. The incident angle is "90 degrees - (the angle of visual line θ₁ + the mirror angle ϕ₁)".

An angle X₁ in Fig. 10 is "90 degrees - the incident angle - the angle of visual line θ₁ = the mirror angle ϕ₁".

Information decision unit 120 computes the angle Y₁ in the vehicle type A. The angle Y₁ is "the incident angle - X₁ = 90 degrees - the angle θ₁ - 2 × the mirror angle ϕ₁".

Similarly, the information decision unit 120 can compute the angle Y₁ in the vehicle type B. Further, the information decision unit 120 sets the mirror angle ϕ₁ in the vehicle type B in such a way that the angle Y₁ in the vehicle type B is the same value as the angle Y₁ of the vehicle type A. Further, the information decision unit 120 generates information indicating the horizontal angle of the side mirror 36 of the vehicle type B by using the mirror angle ϕ₁ and the first reference angle of the vehicle type B.

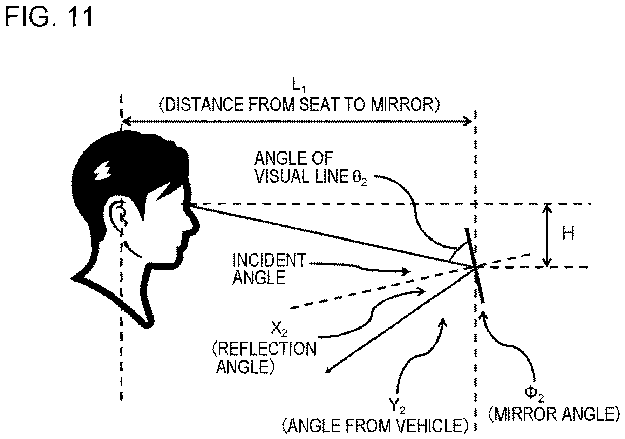

Fig. 11 is a diagram illustrating a third example of the processing that is executed by the information decision unit 120 in step S360 in Fig. 8. In the example illustrated in the present drawing, the information decision unit 120 generates information indicating a vertical angle of the side mirror 36, as at least a part of the setting information.

In vertical direction, an angle Y₂ when a visual line of a user seated on the seat 32 is reflected by the side mirror 36 is also required to be a value desired by the user. In view of this, the information decision unit 120 generates the first setting information relating to the side mirror 36 in such a way that the angle Y₂ according to the setting information of the vehicle type A and the angle Y₂ according to the setting information of the vehicle type B are the same values.

In addition to the example illustrated in Fig. 9, the movable portion information includes the following information.
- A vertical angle when the side mirror 36 is in the standard state (hereinafter, referred to as a second reference angle). Note that, the reference direction may differ according to a vehicle type.
- A distance L₂ from the pedal 34 to the side mirror 36 in the longitudinal direction of the vehicle
- A height of a seat surface of the seat 32 with the ground surface as a reference when the seat 32 is at a reference position (for example, the point 0)
- A height of the side mirror 36 with the ground surface as a reference

In addition to the example illustrated in Fig. 9, the setting information includes the following information.
- Vertical inclination of the side mirror 36 with the second reference angle as a reference
- A change amount of a height of the seat 32 from the reference position.

The information decision unit 120 reads out physical body information of a driver (user) from the first storage unit 140. The physical body information includes a seated height.

The information decision unit 120 computes the distance L₁. A method for computing the distance L₁ is as described with reference to Fig. 10. Further, the information decision unit 120 computes an interval H between the side mirror 36 and an eye of a driver in the height direction. The interval H is computed based on ""the height of the seat surface of the seat 32 with the ground surface as a reference when the seat 32 is at the reference position" + "the change amount of the height of the seat 32 from the reference position" + "a seated height of a driver" - "(the height of the side mirror 36 with the ground surface as a reference)"".

Further, the information decision unit 120 computes an angle of visual line θ₂ of a driver relating to the height direction. The angle θ₂ is "arctan(H/L₁)".

Further, the information decision unit 120 computes a mirror angle ϕ₂ (with vertical direction as a reference) according to the setting information of the vehicle type A by using the second reference angle and the inclination of the side mirror 36 in the setting information. Further, the information decision unit 120 computes an incident angle of a visual line of a driver according to the setting information of the vehicle type A. The incident angle is the angle θ₂ of the visual line + the mirror angle ϕ₂).

An angle X₂ in Fig. 10 is "90 degrees - (90 degrees - the angle θ₂ - the mirror angle ϕ₂)" = "θ₂+ϕ₂".

Further, the information decision unit 120 computes the angle Y₂ in the vehicle type A. The angle Y₂ is "90 degrees - X₂ - ϕ₂" = "90 degrees - (θ₂+ϕ₂) - ϕ₂" = "90 degrees - θ₂- 2 × ϕ₂".

Further, similarly, the information decision unit 120 can compute the angle Y₂ in the vehicle type B. Further, the information decision unit 120 sets the mirror angle ϕ₂ in the vehicle type B in such a way that the angle Y₂ in the vehicle type B is the same value as the angle Y₂ of the vehicle type A. Further, the information decision unit 120 generates information indicating the vertical angle of the side mirror 36 in the vehicle type B by using the mirror angle ϕ₂ and the second reference angle of the vehicle type B.

As described above, according to the present example embodiment, a user of the vehicle 30 is not required to individually set a state of a setting target such as a position of a seat and an angle of a side mirror. Thus, operations that a user is required to do is reduced at the time of changing the setting of the setting target to a user's preferred state. In particular, when face information is used as user determination information, a user is not required to input the user determination information, and hence there is almost no operation for the user to do.

Moreover, the first storage unit 140 stores setting information for each vehicle type and for each user. Herein, when setting information relating to a vehicle type that is currently used by a user is not stored in the first storage unit 140, the vehicle setting apparatus 10 generates setting information relating to the vehicle type being currently used by using setting information relating to another vehicle type. It is highly likely that the setting indicated by the setting information is close to a preference of a user. Therefore, operations that a user is required to do is reduced.

While the example embodiments of the present invention are described above with reference to the drawings, those are exemplifications of the present invention, and various configurations other than those described above may be adopted.

Further, in the plurality of flowcharts used in the description given above, the plurality of steps (processing) are described in order, but the execution order of the steps executed in each of the example embodiments is not limited to the described order. In each of the example embodiments, the order of the illustrated steps may be changed within a range that does not interfere with the contents. Further, the example embodiments described above may be combined with each other within a range that the contents do not contradict with each other.

The whole or some of the example embodiments described above also can be described as, but not limited to, the following supplementary notes.
1. A vehicle setting apparatus communicating with a vehicle onboard apparatus mounted on a vehicle, the vehicle setting apparatus including:
   a first reception unit that receives, from the vehicle onboard apparatus, user identification information for identifying a user boarding the vehicle;
   an information decision unit that reads out first setting information from a first storage unit that stores setting information for setting a state of a setting target of a vehicle for each person, in relation to the user identification information of the person, the first setting information being the setting information relating to the user identification information being received by the first reception unit; and
   a first transmission unit that transmits the first setting information to the vehicle onboard apparatus.
2. The vehicle setting apparatus according to supplementary note 1, in which the user identification information includes biometric information.
3. The vehicle setting apparatus according to supplementary note 1 or 2, in which the setting target includes a movable portion.
4. The vehicle setting apparatus according to supplementary note 3, in which
   the first storage unit stores the setting information for each piece of vehicle type information indicating a vehicle type of the vehicle and each piece of the user identification information,
   the first reception unit acquires the vehicle type information indicating the vehicle type of the vehicle, together with the user identification information, and
   the information decision unit reads out the setting information as the first setting information from the first storage unit, the setting information being relating to a target combination being a combination of the vehicle type information and the user identification information that are received by the first reception unit.
5. The vehicle setting apparatus according to supplementary note 4, in which
   when the setting information relating to the target combination is not stored in the first storage unit, the information decision unit:
   reads out second setting information being the setting information relating to a combination of another piece of the vehicle type information and the user identification information; and
   reads out, from a second storage unit that stores movable portion information relating to the movable portion of the vehicle type for each piece of the vehicle type information, the movable portion information relating to the vehicle type information that is received by the first reception unit and the movable portion information relating to the another piece of the vehicle type information and generates the first setting information by using the two pieces of the movable portion information and the second setting information.
6. The vehicle setting apparatus according to supplementary note 5, in which
   the movable portion includes a driver's seat,
   the setting information includes a position of the driver's seat in a front-and-rear direction, and
   the movable portion information includes information relating to a relative position between the driver's seat in a standard state and at least one of an accelerator pedal and a brake pedal.
7. The vehicle setting apparatus according to supplementary note 5 or 6, in which
   the movable portion includes a mirror,
   the setting information includes an angle of the mirror, and
   the movable portion information includes information relating to a relative angle of the mirror in a standard state relating to a driver's seat in a standard state as a reference.
8. The vehicle setting apparatus according to supplementary note 7, in which
   the information decision unit further decides the angle of the mirror by using physical body information of the user.
9. The vehicle setting apparatus according to any one of supplementary notes 4 to 8, in which
   the first reception unit receives update information for generating or updating the setting information and the vehicle type information, from the vehicle onboard apparatus,
   the vehicle setting apparatus further including an update unit that updates information stored in the first storage unit by using the update information and the vehicle type information that are received by the first reception unit.
10. A vehicle onboard apparatus being mounted on a vehicle, the vehicle onboard apparatus including:
   an acquisition unit that acquires user identification information for identifying a user boarding the vehicle;
   a second transmission unit that transmits the user identification information to a vehicle setting apparatus;
   a second reception unit that acquires setting information for setting a state of a setting target of the vehicle, from the vehicle setting apparatus; and
   a setting processing unit that executes setting processing of setting the state of the setting target by using the setting information.
11. The vehicle onboard apparatus according to supplementary note 10, in which the user identification information includes biometric information.
12. The vehicle onboard apparatus according to supplementary note 10 or 11, in which
   the setting processing unit executes the setting processing before the vehicle starts moving,
   the vehicle onboard apparatus including an update information generation unit that generates update information for updating the setting information, based on the state of the setting target of the vehicle after the vehicle stops,
      in which
   the second transmission unit transmits the update information to the vehicle setting apparatus.
13. A vehicle setting system including:
   the vehicle setting apparatus according to any one of supplementary notes 1 to 9; and
   the vehicle onboard apparatus according to any one of supplementary notes 10 to 12.
14. A vehicle setting method including,
   by a computer that communicates with a vehicle onboard apparatus mounted on a vehicle:
   first reception processing of receiving user identification information for identifying a user boarding the vehicle, from the vehicle onboard apparatus;
   information decision processing of reading out first setting information, from a first storage unit that stores setting information for setting a state of a setting target of a vehicle for each person, in relation to the user identification information of the person, the first setting information being the setting information relating to the user identification information being acquired in the first reception processing; and
   first transmission processing of transmitting the first setting information to the vehicle onboard apparatus.
15. The vehicle setting method according to supplementary note 14, in which the user identification information includes biometric information.
16. The vehicle setting method according to supplementary note 14 or 15, in which
   the setting target includes a movable portion.
17. The vehicle setting method according to supplementary note 16, in which
   the first storage unit stores the setting information for each piece of vehicle type information indicating a vehicle type of the vehicle and each piece of the user identification information, and
   the computer:
      acquires the vehicle type information indicating the vehicle type of the vehicle, together with the user identification information, in the first reception processing; and
      reads out the setting information as the first setting information from the first storage unit, the setting information being relating to a target combination being a combination of the vehicle type information and the user identification information that are received in the first reception processing, in the information decision processing.
18. The vehicle setting method according to supplementary note 17, in which,
   when the setting information relating to the target combination is not stored in the first storage unit in the information decision processing, the computer:
   reads out second setting information being the setting information relating to a combination of another piece of the vehicle type information and the user identification information; and
   reads out, from a second storage unit that stores movable portion information relating to the movable portion of the vehicle type for each piece of the vehicle type information, the movable portion information relating to the vehicle type information that is received in the first reception processing and the movable portion information relating to the another piece of the vehicle type information, and generates the first setting information by using the two pieces of the movable portion information and the second setting information.
19. The vehicle setting method according to supplementary note 18, in which
   the movable portion includes a driver's seat,
   the setting information includes a position of the driver's seat in a front-and-rear direction, and
   the movable portion information includes information relating to a relative position between the driver's seat in a standard state and at least one of an accelerator pedal and a brake pedal.
20. The vehicle setting method according to supplementary note 18 or 19, in which
   the movable portion includes a mirror,
   the setting information includes an angle of the mirror, and
   the movable portion information includes information relating to a relative angle of the mirror in a standard state, relating to the driver's seat in a standard state as a reference.
21. The vehicle setting method according to supplementary note 20, in which,
   in the information decision processing, the computer further decides the angle of the mirror by using physical body information of the user.
22. The vehicle setting method according to any one of supplementary notes 17 to 21, in which
   the computer:
   receives, from the vehicle onboard apparatus, update information for generating or updating the setting information and the vehicle type information in the first reception processing;
   the vehicle setting method further including update processing of updating information stored in the first storage unit by using the update information and the vehicle type information that are received in the first reception processing.
23. A vehicle setting method including,
   by a computer mounted on a vehicle:
   acquisition processing of acquiring user identification information for identifying a user boarding the vehicle;
   second transmission processing of transmitting the user identification information to a vehicle setting apparatus;
   second reception processing of acquiring, from the vehicle setting apparatus, setting information for setting a state of a setting target of the vehicle; and
   setting processing of setting the state of the setting target, based on the setting information.
24. The vehicle setting method according to supplementary note 23, in which the user identification information includes biometric information.
25. The vehicle setting method according to supplementary note 23 or 24, in which
   the computer:
      executes the setting processing before the vehicle starts moving,
   the vehicle setting method further including update information generation processing of generating update information for updating the setting information, based on the state of the setting target of the vehicle after the vehicle stops,
      in which
   the computer: transmits the update information to the vehicle setting apparatus in the second transmission processing.
26. A program causing a computer that communicates with a vehicle onboard apparatus mounted on a vehicle to have:
   a first reception function of receiving user identification information for identifying a user boarding the vehicle, from the vehicle onboard apparatus;
   an information decision function of reading out first setting information from a first storage unit that stores setting information for setting a state of a setting target of a vehicle for each person, in relation to the user identification information of the person, the first setting information being the setting information relating to the user identification information being received by the first reception function; and
   a first transmission function of transmitting the first setting information to the vehicle onboard apparatus.
27. The program according to supplementary note 26, in which
   the user identification information includes biometric information.
28. The program according to supplementary note 26 or 27, in which
   the setting target includes a movable portion.
29. The program according to supplementary note 28, in which
   the first storage unit stores the setting information for each piece of vehicle type information indicating a vehicle type of the vehicle and each piece of the user identification information,
   the first reception function acquires the vehicle type information indicating the vehicle type of the vehicle, together with the user identification information, and
   the information decision function reads out the setting information as the first setting information from the first storage unit, the setting information being relating to a target combination being a combination of the vehicle type information and the user identification information that are received by the first reception function.
30. The program according to supplementary note 29, in which,
   when the setting information relating to the target combination is not stored in the first storage unit, the information decision function:
   reads out second setting information being the setting information relating to a combination of another piece of the vehicle type information and the user identification information; and
   reads out, from a second storage unit that stores movable portion information relating to the movable portion of the vehicle type for each piece of the vehicle type information, the movable portion information relating to the vehicle type information that is received by the first reception function and the movable portion information relating to the another piece of the vehicle type information, and generates the first setting information by using the two pieces of movable portion information and the second setting information.
31. The program according to supplementary note 30, in which
   the movable portion includes a driver's seat,
   the setting information includes a position of the driver's seat in a front-and-rear direction, and
   the movable portion information includes information relating to a relative position between the driver's seat in a standard state and at least one of an accelerator pedal and a brake pedal.
32. The program according to supplementary note 30 or 31, in which
   the movable portion includes a mirror,
   the setting information includes an angle of the mirror, and
   the movable portion information includes information relating to a relative angle of the mirror in a standard state, relating to the driver's seat in a standard state as a reference.
33. The program according to supplementary note 32, in which
   the information decision function further decides the angle of the mirror by using physical body information of the user.
34. The program according to any one of supplementary notes 29 to 33, in which
   the first reception function receives, from the vehicle onboard apparatus, update information for generating or updating the setting information and the vehicle type information,
   the program further including an update function of updating information stored in the first storage unit by using the update information and the vehicle type information that are received by the first reception function.
35. A program causing a computer mounted on a vehicle to have:
   an acquisition function of acquiring user identification information for identifying a user boarding the vehicle;
   a second transmission function of transmitting the user identification information to a vehicle setting apparatus;
   a second reception function of acquiring, from the vehicle setting apparatus, setting information for setting a state of a setting target of a vehicle; and
   a setting processing function of executing setting processing of setting a state of the setting target, based on the setting information
36. The program according to supplementary note 35, in which
   the user identification information includes biometric information.
37. The program according to supplementary note 35 or 36, in which
   the setting processing function executes the setting processing before the vehicle starts moving,
   the program further including an update information generation function of generating update information for updating the setting information, based on the state of the setting target of the vehicle after the vehicle stops, in which
   the second transmission function transmits the update information to the vehicle setting apparatus.

### REFERENCE SIGNS LIST

- 10: Vehicle setting apparatus
- 20: Vehicle onboard apparatus
- 30: Vehicle
- 32: Seat
- 34: Pedal
- 36: Side mirror
- 110: First reception unit
- 120: Information decision unit
- 130: First transmission unit
- 140: First storage unit
- 150: Second storage unit
- 160: Update unit
- 210: Acquisition unit
- 220: Second transmission unit
- 230: Second reception unit
- 240: Setting processing unit
- 250: Update information generation unit

## Claims

1. A vehicle setting apparatus communicating with a vehicle onboard apparatus mounted on a vehicle, the vehicle setting apparatus comprising:
a first reception unit that receives, from the vehicle onboard apparatus, user identification information for identifying a user boarding the vehicle;
an information decision unit that reads out first setting information from a first storage unit that stores setting information for setting a state of a setting target of a vehicle for each person, in relation to the user identification information of the person, the first setting information being the setting information relating to the user identification information being received by the first reception unit; and
a first transmission unit that transmits the first setting information to the vehicle onboard apparatus.

2. The vehicle setting apparatus according to claim 1, wherein
the user identification information includes biometric information.

3. The vehicle setting apparatus according to claim 1 or 2, wherein
the setting target includes a movable portion.

4. The vehicle setting apparatus according to claim 3, wherein
the first storage unit stores the setting information for each piece of vehicle type information indicating a vehicle type of the vehicle and each piece of the user identification information,
the first reception unit acquires the vehicle type information indicating the vehicle type of the vehicle together with the user identification information, and
the information decision unit reads out the setting information as the first setting information from the first storage unit, the setting information being relating to a target combination being a combination of the vehicle type information and the user identification information that are received by the first reception unit.

5. The vehicle setting apparatus according to claim 4, wherein,
when the setting information relating to the target combination is not stored in the first storage unit, the information decision unit:
reads out second setting information being the setting information relating to a combination of another piece of the vehicle type information and the user identification information; and
reads out, from a second storage unit that stores movable portion information relating to the movable portion of the vehicle type for each piece of the vehicle type information, the movable portion information relating to the vehicle type information that is received by the first reception unit and the movable portion information relating to the another piece of the vehicle type information, and generates the first setting information by using the two pieces of the movable portion information and the second setting information.

6. The vehicle setting apparatus according to claim 5, wherein
the movable portion includes a driver's seat,
the setting information includes a position of the driver's seat in a front-and-rear direction, and
the movable portion information includes information relating to a relative position between the driver's seat in a standard state and at least one of an accelerator pedal and a brake pedal.

7. The vehicle setting apparatus according to claim 5 or 6, wherein
the movable portion includes a mirror,
the setting information includes an angle of the mirror, and
the movable portion information includes information relating to a relative angle of the mirror in a standard state relating to a driver's seat in a standard state as a reference.

8. The vehicle setting apparatus according to claim 7, wherein
the information decision unit further decides the angle of the mirror by using physical body information of the user.

9. The vehicle setting apparatus according to any one of claims 4 to 8, wherein
the first reception unit receives update information for generating or updating the setting information and the vehicle type information, from the vehicle onboard apparatus,
the vehicle setting apparatus further comprising an update unit that updates information stored in the first storage unit by using the update information and the vehicle type information that are received by the first reception unit.

10. A vehicle onboard apparatus being mounted on a vehicle, the vehicle onboard apparatus comprising:
an acquisition unit that acquires user identification information for identifying a user boarding the vehicle;
a second transmission unit that transmits the user identification information to a vehicle setting apparatus;
a second reception unit that acquires setting information for setting a state of a setting target of the vehicle, from the vehicle setting apparatus; and
a setting processing unit that executes setting processing of setting the state of the setting target by using the setting information.

11. The vehicle onboard apparatus according to claim 10, wherein
the user identification information includes biometric information.

12. The vehicle onboard apparatus according to claim 10 or 11, wherein
the setting processing unit executes the setting processing before the vehicle starts moving,
the vehicle onboard apparatus further comprising an update information generation unit that generates update information for updating the setting information, based on the state of the setting target of the vehicle after the vehicle stops,
wherein
the second transmission unit transmits the update information to the vehicle setting apparatus.

13. A vehicle setting system comprising:
the vehicle setting apparatus according to any one of claims 1 to 9; and
the vehicle onboard apparatus according to any one of claims 10 to 12.

14. A vehicle setting method comprising,
by a computer that communicates with a vehicle onboard apparatus mounted on a vehicle:
first reception processing of receiving user identification information for identifying a user boarding the vehicle, from the vehicle onboard apparatus;
information decision processing of reading out first setting information, from a first storage unit that stores setting information for setting a state of a setting target of a vehicle for each person, in relation to the user identification information of the person, the first setting information being the setting information relating to the user identification information being acquired in the first reception processing; and
first transmission processing of transmitting the first setting information to the vehicle onboard apparatus.

15. A vehicle setting method comprising,
by a computer mounted on a vehicle:
acquisition processing of acquiring user identification information for identifying a user boarding the vehicle;
second transmission processing of transmitting the user identification information to a vehicle setting apparatus;
second reception processing of acquiring setting information for setting a state of a setting target of the vehicle, from the vehicle setting apparatus; and
setting processing of executing setting processing of setting the state of the setting target, based on the setting information.

16. A program causing a computer that communicates with a vehicle onboard apparatus mounted on a vehicle to have:
a first reception function of receiving user identification information for identifying a user boarding the vehicle, from the vehicle onboard apparatus;
an information decision function of reading out first setting information, from a first storage unit that stores setting information for setting a state of a setting target of a vehicle for each person, in relation to the user identification information of the person, the first setting information being the setting information relating to the user identification information being received by the first reception function; and
a first transmission function of transmitting the first setting information to the vehicle onboard apparatus.

17. A program causing a computer mounted on a vehicle to have:
an acquisition function of acquiring user identification information for identifying a user boarding the vehicle;
a second transmission function of transmitting the user identification information to a vehicle setting apparatus;
a second reception function of acquiring setting information for setting a state of a setting target of the vehicle, from the vehicle setting apparatus; and
a setting processing function of executing setting processing of setting a state of the setting target, based on the setting information.
